# EUROPEAN PATENT APPLICATION

(11) **EP 4 804 378 A1**
(43) Date of publication of application: **09.09.2026**
(21) Application number: 25162151.2
(22) Date of filing: 06.03.2025
(51) Int. Cl.: H02J 15/00, C25B 1/04

(54) **ADVANCED RECTIFIER CONTROLS FOR IMPROVED FAULT RIDE THROUGH IN ELECTROLYSIS SYSTEMS**

(71) Applicant: Siemens Energy Global GmbH & Co. KG, 81739 München (DE)
(72) Inventor: Loku, Fisnik, 90439 Nürnberg (DE); Aubermann, Manfred, 90478 Nürnberg (DE); Buratckii, Artem, 90459 Nürnberg (DE); Thakur, Faisal, 91052 Erlangen (DE)

(57) **Abstract**

The invention is about a method for controlling an electrolysis system (1) comprising a transformer unit (2), rectifier units (3) operating in parallel, and electrolysis module rows (4) with hydrogen and oxygen sides (5, 6) connected at DC sides (7) of the rectifier units (3), the method comprising:
- detecting a Fault Ride Through event; and
- adjusting the ramp-up rate of a DC current considering a current position of control valves (8) on the hydrogen and oxygen sides (5, 6).

## Description

### TECHNICAL FIELD

The invention relates to a method for controlling an electrolysis system during a Fault Ride Through.

### BACKGROUND

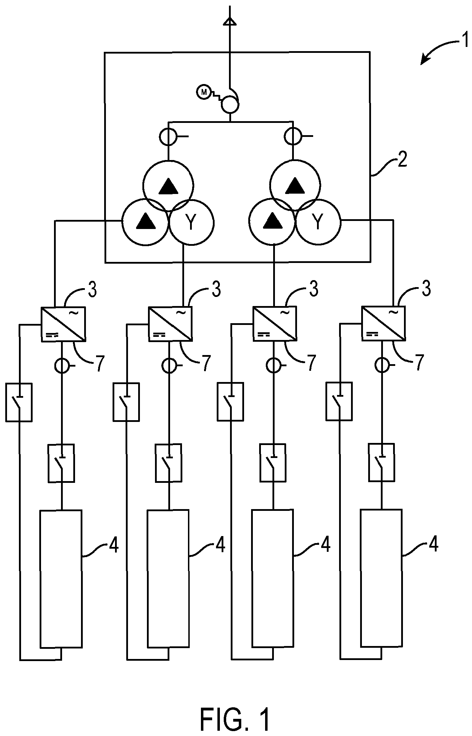

Electrolysis systems mainly comprise a transformer unit, rectifier units operating in parallel, and electrolysis module rows connected at a DC side of the rectifier units. As shown in FIG 1, the transformer unit consists of an autotransformer with a tap changer and two three-winding transformers with a phase difference of 15° between them, forming a so-called 24-pulse system operation.

Connecting large electrolysis systems to the public grid requires compliance with or fulfillment of the local grid code requirements. Part of these requirements - especially for large plants - is a Fault Ride Through capability. "Fault Ride Through" (FRT) refers to the capability of power generation systems, particularly renewable energy sources like wind turbines and solar photovoltaic (PV) systems, or large consumers to remain connected to the electrical grid during short-duration voltage disturbances or faults. This capability is crucial for maintaining grid stability and reliability.

Important for the grid operator is the availability of the load after the fault is cleared, so-called post-fault recovery behavior. Should a large plant trip in case of short time disturbances within the grid, the grid operator would struggle to balance the power exchange between plant and network after fault clearance. The power plants producing the power cannot be adjusted quick enough. Therefore, only a certain power is allowed to trip, and it is essential for large consumers to remain connected in case of a violation of the allowed voltage band.

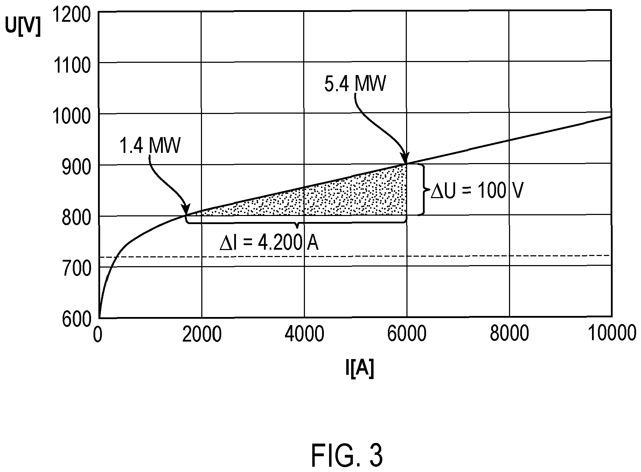

Since the electrolysis characteristic is highly dependent on the input voltage, already a slight voltage reduction changes the input power strongly (see FIG 3). If the cell voltage drops below the Nernst voltage (about 1.23 V for water electrolysis), the gas production and thus electrolysis process stops completely.

Control valves are used to control the pressure within the electrolysis system to minimize the decline in pressure. As the valves on the process side are designed to keep the O2 and the H2 pressure within the defined limits, the valves are normally operating at a certain opening position. In case of the DC current reduction, i.e. reduction in the gas production, the control valves would start to operate to keep the pressure within the electrolysis system at the desired value. If during this time the voltage on the AC side is recovered and the controller tries to force the DC current to its reference value, therefore provide a firing angle of e.g. 0°, as soon as the voltage is recovered, the DC current control will try to increase the DC current with the predefined ramping up rates as for the steady state operation.

However, considering that the control valves have higher time constants regarding the time to react effectively, i.e. are slower than the rectifier controls, the control valves might continue operating in the direction to minimize the decline in pressure, while the DC current has started to increase with the predefined ramping up rates. This would lead to an immediate increase in the gas production and finally might lead to a trip of the electrolysis plant due to an overpressure as the critical threshold values are exceeded.

### SUMMARY OF INVENTION

Grid Codes are technical regulations established by grid operators to ensure the stability and reliability of the power grid. In the past, these regulations primarily applied to power generators and grid operators, but not to large consumers. This meant that large consumers, such as industrial electrolysis systems, would simply disconnect from the grid during faults, potentially causing significant imbalances in the power grid.

Nowadays, however, large consumers are also required to comply with Grid Codes. This means they must remain connected to the grid during disturbances, such as temporary voltage dips, and meet specific requirements. These requirements include the ability to perform a Fault Ride Through, where the system remains stable during a voltage dip and quickly returns to normal operation once the disturbance is cleared.

Compliance with Grid Codes is essential for large consumers to ensure grid stability and meet the demands of grid operators.

The problem is solved by a method for controlling an electrolysis system comprising a transformer unit, rectifier units operating in parallel, and electrolysis module rows with hydrogen and oxygen sides connected at DC sides of the rectifier units, wherein the method comprises: detecting a Fault Ride Through event; and adjusting the ramp-up rate of a DC current considering a current position of control valves on the hydrogen and oxygen sides.

Adjusting the ramp-up rate of the DC current considering the current position of control valves on the hydrogen and oxygen sides is advantageous for several reasons:
▪ Prevents Overpressure: Control valves have higher time constants and react slower than rectifier controls. If the DC current ramps up too quickly while the control valves are still adjusting to minimize pressure decline, it could lead to an immediate increase in gas production. This might cause the electrolysis system to trip due to overpressure as critical threshold values are exceeded.
▪ Ensures Stable Pressure: A stable pressure is crucial for the efficiency of the electrolysis process. Too low a pressure can reduce the reaction rate, while too high a pressure can lead to safety risks. By adjusting the ramp-up rate based on the control valves' position, the system can maintain optimal pressure, ensuring efficient electrolysis.
▪ Improves Fault Ride Through Capability: During a Fault Ride Through event, the system needs to remain connected to the grid and quickly return to normal operation once the disturbance is cleared. By considering the control valves' position, the system can better manage the ramp-up of the DC current, ensuring it meets grid code requirements and provides necessary grid services.

Overall, this method enhances the reliability and safety of the electrolysis system during grid disturbances, ensuring compliance with grid codes and maintaining efficient operation.

It is advantageous to have an additional control loop implemented, e.g. a droop control, that continuously relates the current position of the control valves to a defined ramp-up rate. For instance, if after the DC voltage has dropped and is at a level higher than the polarisation voltage where the DC current is still flowing on the DC side, and the control valves have already started acting to minimize the decline in pressure, the position of the control valves is constantly sent to the rectifier controls.

Depending on the input from the previous step, the additional control logic, e.g. the droop control, provides the required ramp up rates of the DC current based on the current position of the control valves.

Furthermore, this additional logic can be modified to include the grid operator requirements on the active power recovery after the faults and ensure that on one side the electrolyser does not trip due to a pressure threshold value being exceeded, and on the other side the required active power consumption can be resumed on time as defined by the grid operators. This could be achieved by freezing the position of the control valves at a certain position during the Fault Ride Through event and permit a certain pressure decline which is acceptable.

The invention ensures that there will be no trip due to high pressure for any kind of electrolysis system (PEM and alkaline). It is a basic requirement and function which each of these plants must fulfil to become grid code compliant.

### BRIEF DESCRIPTION OF DRAWINGS

**FIG 1** shows a diagram of an electrolysis system,
**FIG 2** shows an example of Fault Ride Through events and requirements,
**FIG 3** shows the voltage-current-dependency as well as the threshold for gas production and
**FIG 4** shows a section of an electrolysis system where the ramp-up rate of a direct current can be set considering the current position of control valves.

### DESCRIPTION OF EMBODIMENTS

FIG 1 shows an electrolysis systems 1 comprising a transformer unit 2, rectifier units 3 operating in parallel, and electrolysis module rows 4 connected at a DC side 7 of the rectifier units 3. As shown in FIG 1, the transformer unit 2 consists of an autotransformer with a tap changer and two three-winding transformers. These have a phase difference of 15° between them and form a so-called 24-pulse system operation.

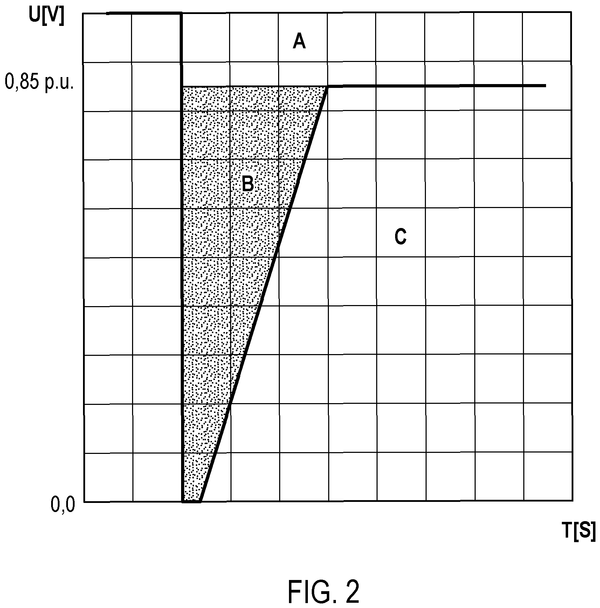

The grid operator specifies a curve where the voltage dip is time dependently shown in FIG 2, during which the plant must remain connected (Area A + B). Longer or deeper voltage dips allow a disconnection of the plant (Area C). Similar requirements apply for temporary voltage increases. Fulfilling this requirement is a challenge for the electrolysis system 1 and its transformer unit 2.

For the example in FIG 3, nominal electrolyser system voltage at begin of life is at about 980 V, while the threshold for hydrogen production is in the range of 720 V. Should the input voltage drop quickly to 0.73 p.u., no power can be consumed anymore by the electrolysis system. This leads to massive imbalance between power generation and consumption, when several GW of electrolysis capacity are simultaneously affected, while the generation units continue to operate with just slightly reduced power compared to the pre-fault values.

In the example of FIG 3, the threshold value for gas generation is in the range of 720 V, which means that in case the voltage would drop below this level, there will be no DC current flowing on the DC side, thereby halting the production of gas. In case the voltage is returned after a very short period, the controllers are normally designed in such a way that the DC current ramps up after the fault, following defined ramp up rates which are necessary for the initialization of the electrolysis system to enable the steady state operation again. This usually ensures that the increase in direct current is controlled together with the gas production on the process side and that all relevant parameters that could lead to the electrolysis plant being switched off are within their limits.

However, for the cases where the voltage drop is not below the threshold of 720 V but remains at higher levels, there will be situations where the drop in the DC current is significant, however not zero as it remains in the kA range.

In normal operation, the ramp-up speeds of the direct current are defined in such a way that they support the steady-state operation of the electrolysis modules 1. This means that the DC current rises at a fixed speed to control gas production on the process side and ensure that all relevant parameters remain within their limits.

After a voltage drop, however, the ramp-up speeds of the DC current change. When the voltage on the AC side is restored, the controller attempts to bring the DC current to its setpoint. This is where the present invention comes in. The ramp-up speed of the direct current is not specified as in normal operation but depends on the current position of the control valves. This adjustment is necessary because the control valves 8 have higher time constants in terms of reaction time and are slower than the rectifier controls 9. If the control valves 8 continue to try to minimise the pressure drop while the DC current is already rising, this could lead to an immediate increase in gas production and ultimately to a failure of the electrolysis system 1 due to overpressure.
A stable pressure is important for the efficiency of the electrolysis process. Too low a pressure can reduce the reaction rate, while too high a pressure can lead to safety risks. Therefore, the correct setting of the control valves 8 is crucial to ensure optimum pressure and thus efficient electrolysis.

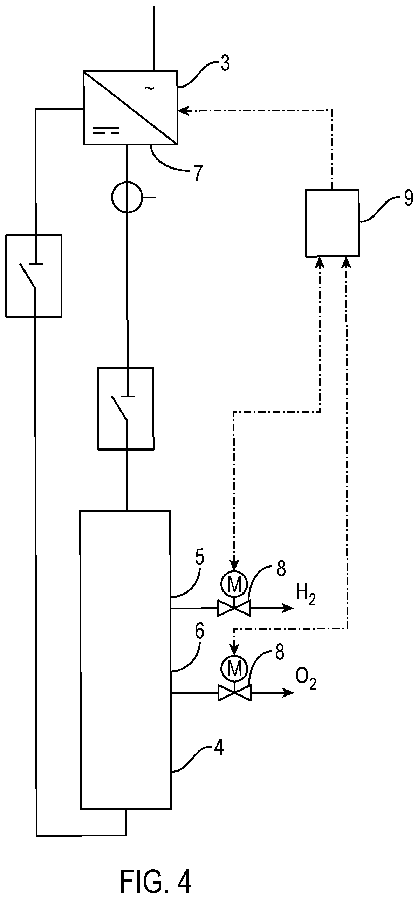

FIG 4 shows a section of an electrolysis system 1 where the ramp-up rate of a direct current can be set by the rectifier control 9 considering the current position of control valves 8.

## Claims

1. A method for controlling an electrolysis system (1) comprising a transformer unit (2), rectifier units (3) operating in parallel, and electrolysis module rows (4) with hydrogen and oxygen sides (5, 6) connected at DC sides (7) of the rectifier units (3), the method comprising:
- detecting a Fault Ride Through event; and
- adjusting the ramp-up rate of a DC current considering a current position of control valves (8) on the hydrogen and oxygen sides (5, 6).

2. The method of claim 1, wherein an additional control loop is implemented that continuously relates the current position of the control valves (8) to a defined ramp-up rate.

3. The method of claim 1 or claim 2, wherein the position of the control valves (8) is frozen during the Fault Ride Through event, and a certain pressure decline in the electrolysis system (1) is permitted.
